# EUROPÄISCHE PATENTSCHRIFT

(11) **EP 0 455 979 B1**
(45) Veröffentlichungstag und Bekanntmachung des Hinweises auf die Patenterteilung: **12.01.1994**
(21) Anmeldenummer: 91104698.5
(22) Anmeldetag: 26.03.1991
(51) Int. Cl.: G01C 9/34

(54) **Verfahren zur Herstellung einer Libelle für Wasserwaagen**
Procedure for the production of a vial for spirit level
Procédé de fabrication d'une fiole pour niveau à bulle

(30) Priorität: 08.05.1990 DE 4014638
(43) Veröffentlichungstag der Anmeldung: 13.11.1991
(73) Patentinhaber: BAYERISCHE MASS-INDUSTRIE ARNO KELLER GMBH, 91217 Hersbruck (DE)
(72) Erfinder: Keller, Hans, W-8562 Hersbruck (DE); Dengler, Herbert, W-8562 Hersbruck (DE)
(74) Vertreter: Matschkur, Götz, Lindner Patent- und Rechtsanwälte

(56) Entgegenhaltungen:
- CH-A- 575 593
- FR-A- 1 147 312
- FR-A- 1 448 855
- FR-A- 2 449 868

## Beschreibung

Die Erfindung richtet sich auf ein Verfahren zur Herstellung einer Libelle für Wasserwaagen mit einem tonnenförmigen Hohlraum, der mit einer eine Gasblase enthaltenden Flüssigkeit gefüllt ist und Markierungsringe aufweist, indem ein dünnwandiges Libellenröhrchen in die Bohrung eines Formkörpers eingefügt und darin fixiert wird, deren Innenkontur der Kontur der Hüllfläche des Libellenröhrchens entspricht. Eine derartige Libelle ist z.B. aus FR-A-2 449 868 bekannt.

Die Qualität eines solchen Meßgeräts ist weitgehend von derjenigen ihrer Libelle abhängig. Nicht anders verhält es sich mit den Herstellungskosten. Qualifizierte Wasserwaagen verwenden eine Libelle, bei welcher in einem vergleichsweise dickwandigen Formkörper entsprechender Formgebung eine tonnenförmige Bohrung vorgesehen ist, die die eine Gasblase enthaltene Flüssigkeit aufnimmt und verschlossen wird. Bei der Fertigung geht man von einer zylindrischen Bohrung aus, die in einem aufwendigen weiteren Bearbeitungsvorgang mittels eines axial eingeführten Werkzeugs tonnenförmig ausgedreht wird. Nicht weniger aufwendig ist das anschließende Einsetzen von Markierungsringen von Hand in diese ausgedrehte Bohrung. Herstellungstechnisch wesentlich einfacher und damit auch kostengünstiger ist eine andere Ausführungsform einer Libelle, deren Körper um einen tonnenförmigen Kern gespritzt wird. Die hierbei erforderliche Zwangsentformung eines solchen Kernes läßt aber nur eine recht geringe Wandstärke der Libelle zu. In diesem Fall werden die Markierungsringe von außen auf die Wandung der Libelle aufgedruckt, wo sie allerdings der Gefahr von Beschädigungen ausgesetzt sind, worunter wieder die Ablesbarkeit und damit die Meßgenauigkeit leiden.

Das Bestreben richtet sich deshalb auf die Ausbildung einer qualitativ hochwertigen Libelle, die unter Vermeidung der besonders aufwendigen Arbeitsvorgänge in vergleichsweise einfacher und kostengünstiger Weise hergestellt werden, gleichwohl aber für qualitativ hochwertige Wasserwaagen Verwendung finden kann. Zur Lösung dieser Aufgabe sieht die Erfindung ein Verfahren zur Herstellung einer Libelle der eingangs bezeichneten Art vor, bei welchem der Formkörper und das Libellenröhrchen jeweils im Wege des Spritzgießens gebildet werden, wobei die tonnenformige Ausbauchung des Libellenröhrchens auf einem entsprechend tonnenförmigen Kern gespritzt wird, der im Wege der Zwargsentformung entfernt wird. Ein solcher Libellenkörper besteht demnach aus zwei Teilen. Der Formkörper ist im Wege des Spritzgießens leicht herzustellen, desgleichen auch die dünnwandige Libelle. Diese wird aber zur Vermeidung der oben geschilderten Nachteile dieser Ausführungsform in die Bohrung eines Formkörpers eingefügt und darin fixiert. Dieser Vorgang bereitet dann keine Schwierigkeiten, wenn die Innenkontur der Bohrung praktisch der Außenkontur der Libelle entspricht oder der Kontur der Hüllfläche der Libelle kongruent ist. Die Übereinstimmung der Innenabmessung der Bohrung und der Außenabmessung der Libelle gewährleistet einen zuverlässigen Paßsitz, so daß aufwendige zusätzliche Maßnahmen zur Befestigung der beiden Elemente ineinander entbehrlich sind.

Der Grundgedanke der Erfindung läßt eine Reihe von Variationen hinsichtlich der Gestaltung der Bohrung des Formkörpers und der Außenkontur der Libelle zu. So sieht die Erfindung zunächst vor, daß die Außenkontur der Libelle und die Innenkontur der Bohrung kongruent sind. Die beiderseitigen Flächen stimmen dann völlig überein, und es ergibt sich beim Einsetzen der Libelle in die Bohrung eine satte flächige Anlage aneinander.

Eine andere Alternative sieht hingegen vor, daß das eine Element - Libelle oder Bohrung - ein reguläres Prisma und das andere Element - Bohrung oder Libelle - einen Zylinder bilden, wobei der Radius des Umkreises der Grundflächen gleich ist. Die Grundflächen eines solchen Prismas sind gleichseitig, so daß die Prismenkanten den Erzeugenden des Zylinders entsprechen. Es ist jedoch auch denkbar, daß das eine Element - Libelle oder Bohrung - außen einen regulären Pyramidenstumpf und das andere Element - Bohrung oder Libelle - einen Kegelstumpf bilden, wobei der Radius des Umkreises der Grundflächen gleich ist. Bei einer kegelstumpfförmigen Ausbildung der Libelle wird deren Einführen in die Bohrung des Formkörpers erleichtert. Auch wenn bei dieser Ausführungsform der Kegelwinkel vergleichsweise klein ist, also nur eine sehr geringe Konizität vorliegt, wird die Libelle zweckmäßig von der kleineren Grundfläche des Kegelstumpfes her gefüllt, da infolge der dort geringeren Wandstärke die Zwangsentformung des Kerne begünstigt wird.

Es liegt im Rahmen der Erfindung, den Zwischenraum zwischen Libelle und Innenwand der Bohrung mit einer durchsichtigen Flüssigkeit auszufüllen. Diese kann ggf. auch aushärten, wie dies beispielsweise der Fall ist, wenn ein Cyanacrylat od. dgl. Verwendung findet. Bei allen diesen Ausführungsformen kann ein Libellenkörper mit außen aufgedruckten Markierungsringen verwendet werden, ohne daß die Gefahr besteht, daß diese Markierungsringe bei längerem Gebrauch ganz oder teilweise mechanisch beschädigt werden. Die erfindungsgemäße Ausbildung gewährleistet einen zuverlässig wirksamen Schutz dieser Markierungsringe unabhängig von der Gebrauchsdauer der Wasserwaage.

Weitere Merkmale, Einzelheiten und Vorteile der Erfindung ergeben sich aus der folgenden Beschreibung einiger bevorzugter Ausführungsformen der Erfindung sowie anhand der Zeichnung. Hierbei zeigen:
Fig. 1 einen Libellenkörper in perspektivischer Darstellung;
Fig. 2 die beiden Teile des Libellenkörpers vor dem Zusammenbau;
Fig. 3 eine abgewandelte Ausführungsform sowie
Fig. 4 eine weitere Abwandlung der Ausführungsform nach Fig. 2 und
Fig. 5 einen Libellenkörper nach Fig. 4 im Querschnitt und
Fig. 6 einen Schnitt etwa nach Linie VI - VI in Fig. 5.

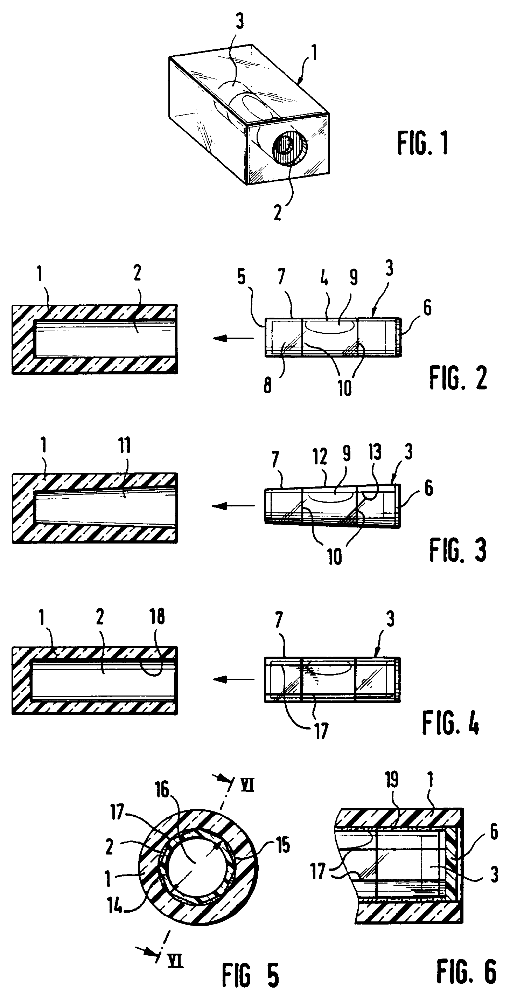

Der komplette Libellenkörper nach Fig. 1 besteht aus einem hier quaderförmigen Formkörper 1 mit einer sich in Längsrichtung erstreckenden Bohrung 2 von kreisförmigem Querschnitt. Dieser Formkörper 1 besteht aus glasklarem und infolgedessen durchsichtigem Kunststoff. Die eigentliche Libelle 3 besteht aus einem Röhrchen mit einer leicht tonnenförmigen Ausbauchung 4 zwischen dem Boden 5 und dem Verschlußdeckel 6. Das Röhrchen 7 ist mit einer durchsichtigen Flüssigkeit 8 gefüllt, die eine Gasblase 9 enthält. In gleichmäßigem Abstand zwischen Boden 5 und Verschlußdeckel 6 sind zwei Markierungsringe 10 außen auf die Wandung des Röhrchens 7 aufgedruckt. Diese Libelle 3 wir, wie durch den Pfeil angedeutet, in die Bohrung 2 des Formkörpers 1 eingeführt und hierin fixiert, z.B. durch Ultraschall-Verschweißung. Das Füllen des Röhrchens kann ggf. auch nach dem Einbauvorgang des Röhrchens 7 in die Bohrung 2 des Formkörpers 1 erfolgen, ohne daß dies eine Qualitätsänderung bewirken würde.

Die Fig. 3 zeigt eine abgewandelte Ausführungsform mit einem Formkörper 1 mit einer Bohrung 11 in Form eines Kegelstumpfes mit einem sehr kleinen Kegelwinkel. In analoger Weise ist die zugehörige Libelle 3 ausgebildet. Die Außenfläche 12 bildet hierbei einen Kegelstumpf. Die Innenwandung 13 des Röhrchens 7 ist hingegen zylindrisch gestaltet.

Die Ausführungsform nach Fig. 4 bis 6 bedient sich wiederum eines Formkörpers 1 mit zylindrischer Bohrung 2. Dagegen ist das Röhrchen 7 der Libelle 3 als Prisma hier mit einer achteckigen Grundfläche 14 gestaltet. Der Umkreis 15 dieses Achtecks 14 hat einen Durchmesser 16, der dem Durchmesser der zylindrischen Bohrung 2 des Formkörpers 1 entspricht. Die Längskanten 17 des Prismas entsprechen zugleich je einer Erzeugenden der zylindrischen Innenwand 18 der Bohrung 2 des Formkörpers 1.

Bei allen in der Zeichnung wiedergegebenen Ausführungsformen sind die die Libelle bildenden Röhrchen 7 dadurch innen leicht tonnenförmig ausgewölbt, daß sie auf einem entsprechenden tonnenförmigen Kern gespritzt sind. Dieser wird im Wege der Zwangsentformung entfernt, was bei der geringen Dicke der Röhrchenwand keine Schwierigkeiten bereitet. Bei der Ausführungsform nach den Fig. 4 bis 6 ist der durch die Achteckform des Röhrchens 7 entstehende Zwischenraum 19 zwischen Libelle 3 und Formkörper 2 mit einer durchsichtigen Flüssigkeit ausgefüllt.

## Patentansprüche

1. Verfahren zur Herstellung einer Libelle für Wasserwaagen mit einem tonnenförmigen Hohlraum, der mit einer eine Gasblase (9) enthaltenden Flüssigkeit (8) gefüllt ist und Markierungsringe (10) aufweist, indem ein dünnwandiges Libellenröhrchen (3,7) in die Bohrung (2) eines Formkörpers (1) eingefügt und darin fixiert wird, deren Innenkontur der Kontur der Hüllfläche des Libellenröhrchens (3,7) entspricht, dadurch gekennzeichnet, daß der Formkörper (1) und das Libellenröhrchen (3,7) jeweils im Wege des Spritzgießens gebildet werden, wobei die tonnenförmige Ausbauchung (4) des Libellenröhrchens (3,7) auf einem entsprechend tonnenförmigen Kern gespritzt wird, der im Wege der Zwangsentformung entfernt wird.

2. Verfahren nach Anspruch 1, dadurch gekennzeichnet, daß ein verbleibender Zwischenraum (19) zwischen Libellenröhrchen (3,7) und Bohrungswandung (18) mit einer durchsichtigen Flüssigkeit ausgefüllt wird.

3. Libelle, hergestellt nach Anspruch 1 oder 2, dadurch gekennzeichnet, daß das eine Element - Libellenröhrchen (3,7) oder Bohrung (2) - ein reguläres Prisma und das andere Element - Bohrung (2) oder Libellenröhrchen (3,7) - einen Zylinder bilden, wobei der Radius (16) des Umkreises (15) der Grundflächen gleich ist.

4. Libelle, hergestellt nach Anspruch 1 oder 2, dadurch gekennzeichnet, daß das eine Element - Libellenröhrchen (3,7) oder Bohrung (2) - einen regulären Pyramidenstumpf und das andere Element - Bohrung (2) oder Libellen (3,7) - einen Kegelstumpf bilden, wobei der Radius der einander zugeordneten Grundflächen gleich ist.

## Claims

1. Method of manufacturing a vial for a spirit level having a barrel-shaped cavity, which is filled with a liquid (8) containing a gas bubble (9) and has marking rings (10), whereby a thin-walled bubble-level tube (3, 7) is inserted into the bore (2) of a moulded part (1) and is fixed therein, the inner contour of the bore corresponding to the contour of the cylindrical face of the bubble-level tube (3, 7), characterised in that the moulded part (1) and the bubble-level tube (3, 7) are each formed by injection moulding, the barrel-shaped convexity (4) of the bubble-level tube (3, 7) being injection moulded on to a similarly barrel-shaped core, which is removed by forcible ejection.

2. Method according to claim 1, characterised in that a space (19) between the bubble-level tube (3, 7) and the bore wall (18) is filled with a transparent liquid.

3. Vial, manufactured according to claim 1 or 2, characterised in that one element - bubble-level tube (3, 7) or bore (2) - forms a regular prism, and the other element - bore (2) or bubble-level tube (3, 7) - forms a cylinder, the radius (16) of the circumference (15) of the base faces being equal.

4. Vial, manufactured according to claim 1 or 2, characterised in that one element - bubble-level tube (3, 7) or bore (2) - forms a regular truncated pyramid and the other element - bore (2) or bubble-level tubes (3, 7) - form a truncated cone, the radius of the mutually associated base faces being equal.

## Revendications

1. Procédé de fabrication d'un récipient pour liquide pour niveau d'eau, avec un espace creux en forme de tonneau, rempli d'un liquide (8) contenant une bulle de gaz (9) et présentant des anneaux de marquage (10), dans lequel un petit tube de récipient pour liquide (3, 7) à paroi mince est introduit dans l'alésage (2) d'un corps profilé (1) et y est fixé, dont le contour intérieur correspond au contour de la surface d'enveloppe du petit tube de récipient pour liquide (3, 7), caractérisé en ce que le corps profilé (1) et le petit tube de récipient pour liquide (3, 7) sont chaque fois formés au cours du moulage par injection, le bombement en tonneau (4) du petit tube de récipient pour liquide (3, 7) étant moulé par injection sur un noyau en forme de tonneau correspondant, enlevé au cours d'un démoulage forcé.

2. Procédé selon la revendication 1, caractérisé en ce qu'un espace intermédiaire (19) subsistant entre le petit tube de récipient pour liquide (3, 7) et la paroi de l'alésage (18) est rempli d'un liquide transparent.

3. Récipient pour liquide, fabriqué selon la revendication 1 ou 2, caractérisé en ce qu'un élément - petit tube de récipient pour liquide (3, 7) ou alésage (2) - forme un prisme régulier et l'autre élément - alésage (2) ou petit tube de récipient pour liquide (3, 7) - forme un cylindre, le rayon (16) du cercle circonscrit (15) des surfaces de base étant le même.

4. Récipient pour liquide, fabriqué selon la revendication 1 ou 2, caractérisé en ce qu'un élément - petit tube de récipient pour liquide (3 7) ou alésage (2) - forme un tronc de pyramide régulier et l'autre élément - alésage (2) ou récipient pour liquide (3, 7) - forme un tronc de cône, le rayon des surfaces de base associées l'une à l'autre étant le même.
